# EUROPÄISCHE PATENTANMELDUNG

(11) **EP 4 697 028 A1**
(43) Veröffentlichungstag der Anmeldung: **18.02.2026**
(21) Anmeldenummer: 25188090.2
(22) Anmeldetag: 08.07.2025
(51) Int. Cl.: G01P 3/481, G01P 3/44, B23F 17/00, B24B 53/075, B24B 47/12, B23Q 17/10, B23Q 17/12, B23F 23/12, G01D 5/12, G01H 1/00

(54) **HARTFEINBEARBEITUNGSMASCHINE**

(30) Priorität: 16.08.2024 DE 102024123482
(71) Anmelder: Kapp Niles GmbH & Co. KG, 96450 Coburg (DE)
(72) Erfinder: GÖBEL, Christopher, 96482 Ahorn (DE); RITZ, Johannes, 96242 Sonnefeld (DE); SENFTLEBEN, Jan, 96450 Coburg (DE)
(74) Vertreter: Gosdin, Carstensen & Partner Patentanwälte Partnerschaftgesellschaft mbB

(57) **Zusammenfassung**

Die Erfindung betrifft eine Hartfeinbearbeitungsmaschine für die Bearbeitung von Werkstücken mit mindestens einer Verzahnung, umfassend eine von einem Motor rotatorisch angetriebene Spindel mit einer ersten und einer weiteren Sensorik, angebracht an einer ersten axialen Position, mit jeweils einem Maßband und einem Lesekopf zur Erfassung der Drehung der Spindel und zur besseren Erkennung von Schwingformen in der Maschine, wobei die erste und die weitere Sensorik mit einer Regelvorrichtung zur Regelung der Drehung der Spindel in Verbindung stehen, wobei an einer von der ersten axialen Position verschiedenen zweiten axialen Position der Spindel eine zweite Sensorik mit einem weiteren Maßband sowie einem weiteren Lesekopf zum Lesen der Signale des weiteren Maßbandes angeordnet ist, die zur Erfassung der Drehung der Spindel an der zweiten axialen Position ausgebildet ist.

## Beschreibung

Die Erfindung betrifft eine Hartfeinbearbeitungsmaschine für die Bearbeitung von Werkstücken mit mindestens einer Verzahnung oder mit mindestens einem Profil, insbesondere Verzahnungsschleifmaschine, umfassend mindestens eine von einem Motor rotatorisch angetriebene Spindel, wobei die Spindel an einer ersten axialen Position eine erste Sensorik zur Erfassung der Drehung, insbesondere des Drehwinkels und/oder der Drehgeschwindigkeit und/oder der Drehbeschleunigung, der Spindel an der ersten axialen Position aufweist, wobei die erste Sensorik mit einer Regelvorrichtung zur Regelung der Drehung der Spindel in Verbindung steht, wobei an einer zweiten axialen Position der Spindel, die von der ersten axialen Position verschieden ist, eine zweite Sensorik angeordnet ist, die zur Erfassung der Drehung, insbesondere des Drehwinkels und/oder der Drehgeschwindigkeit und/oder der Drehbeschleunigung, der Spindel an der zweiten axialen Position ausgebildet ist, wobei die zweite Sensorik mit einer Messeinrichtung in Verbindung steht, wobei weiterhin eine weitere Sensorik an der ersten axialen Position der Spindel angeordnet ist, die zur Erfassung der Drehung, insbesondere des Drehwinkels und/oder der Drehgeschwindigkeit und/oder der Drehbeschleunigung, der Spindel an der ersten axialen Position ausgebildet ist, die ebenfalls mit der Messeinrichtung in Verbindung steht.

Eine gattungsgemäße Hartfeinbearbeitungsmaschine ist aus der DE 10 2009 059 331 A1 bekannt. Die dort beschriebene Ausstattung der Maschine dient zur genauen Ermittlung der Zahnradpositionierung. Hierzu erfasst die weitere Sensorik Messdaten betreffend Parameter der Verzahnung des Werkstücks, welches bearbeitet werden soll. Ähnliche und weitere Lösungen zeigen die DE 10 2005 036 332 A1**,** die DE 10 2021 209 049 A1, die DE 10 2012 022 661 A1 und die DE 10 2020 127 510 A1.

Generell sind solche Hartfeinbearbeitungsmaschinen im Stand der Technik hinlänglich bekannt. Die Drehung einer Werkstückspindel erfolgt im geschlossenen Regelkreis, um insbesondere im Zusammenwirken mit einer gleichermaßen im geschlossenen Regelkreis geregelten Werkzeugspindel sicherzustellen, dass es zwischen der Rotation des Werkstücks und des Werkzeugs (z. B. Schleifschnecke) zu einer präzisen Kopplung kommt. Dies ist erforderlich, um die Verzahnung des Werkstücks gemäß gewünschter Vorgaben exakt zu bearbeiten.

Für ein gutes Schleifergebnis ist dabei insbesondere auch zu beachten, dass bei der Bearbeitung keine unzulässig hohen Schwingungen der beteiligten Komponenten auftreten. Demgemäß gilt es, eine effiziente Schwingungsüberwachung der Maschine zu installieren.

Hinsichtlich einer Überwachung von Maschinenparametern und insbesondere der Drehung einer Spindel einer Hartfeinbearbeitungsmaschine kann grundsätzlich auf Messfunktionen zurückgegriffen werden, welche die Maschinensteuerung zur Verfügung stellt. Alternativ kann auch auf Messfunktionalitäten zurückgegriffen werden, die ein Digital-Analog-Umsetzer (DAU) bereitstellt. Beide Möglichkeiten haben allerdings Nachteile, da entweder die Abtastrate der Signale (Traces) zu gering ist, um eine detaillierte Schwingungsanalyse durchzuführen, oder aber die Genauigkeit (Auflösung) der Signale nicht ausreicht, um geringe Amplituden von Schwingungen hinreichend genau zu erfassen.

Eine direkte Verarbeitung der Messsignale des Drehgebers, welche für die Regelung der Drehung der Spindel eingesetzt wird, d. h. ein zusätzlicher Messabzweig am Lesekopf zur parallelen Messung der Rohsignale, ist aus sicherheitstechnischen Gründen nicht zulässig.

Angebaute Beschleunigungsaufnehmer (uniaxial oder triaxial), wie sie beispielweise in der Nähe der Los- und Festlager verbaut werden, können zwar Schwingungen detektieren, jedoch sind mit dieser Messtechnik lediglich translatorische Schwingungen richtig zu detektieren, nicht jedoch rotatorische.

Weiterhin gibt es die Möglichkeit, eine Strommessung extern zu implementieren; jedoch wird der Strom von Reglereinstellungen (unter anderem durch spezielle Filter im Regelkreis) beeinflusst.

Somit fehlt eine hinreichend genau arbeitende Möglichkeit, um bei der Spindel auftretende spezielle Schwingformen, insbesondere automatisiert während des Bearbeitungsprozesses, vollständig zu detektieren und bei Bedarf entsprechende Maßnahmen einzuleiten.

Der Erfindung liegt die Aufgabe zugrunde, eine gattungsgemäße Hartfeinbearbeitungsmaschine so fortzubilden, dass es möglich ist, eine verbesserte messtechnische Anordnung bereitzustellen, die es ermöglicht, Schwingformen in der Maschine besser zu erkennen. Damit sollen rechtzeitig Maßnahmen eingeleitet werden können, um eine effektive Abhilfe bei auftretenden Schwingungen zu schaffen. Weiterhin soll die Möglichkeit geschaffen werden, automatisch Maßnahmen einzuleiten, um das dynamische Verhalten der Maschine zu verbessern.

Die **Lösung** dieser Aufgabe durch die Erfindung ist dadurch gekennzeichnet, dass die erste Sensorik an der ersten axialen Position ein mit dem rotierenden Teil der Spindel verbundenes Maßband sowie einen mit dem nicht-drehenden Teil der Spindel verbundenen Lesekopf zum Lesen der Signale des Maßbandes umfasst, wobei die weitere Sensorik an der ersten axialen Position der Spindel einen weiteren Lesekopf zum Lesen der Signale des Maßbandes umfasst, wobei die zweite Sensorik an der zweiten axialen Position ein mit dem rotierenden Teil der Spindel verbundenes weiteres Maßband sowie einen mit dem nicht-drehenden Teil der Spindel verbundenen weiteren Lesekopf zum Lesen der Signale des weiteren Maßbandes umfasst.

Besagte weitere Sensorik ist zwar, wie erläutert, an der ersten axialen Position der Spindel angeordnet, hierunter ist jedoch auch ein nahe an dieser Position liegende Stelle zu verstehen.

Demgemäß wird der Drehgeber (bzw. das Maßband), welcher für die Regelung der Drehung der Spindel im Rahmen des Regelungskonzepts benötigt wird, eingesetzt, um den weiteren Lesekopf mit Daten zu beliefern, der Signale an die Messeinrichtung liefert.

Die Messeinrichtung ist dabei bevorzugt als von der Regelvorrichtung getrennte Einheit ausgebildet.

Die Spindel kann eine Werkstückspindel oder eine Werkzeugspindel sein, gleichermaßen aber auch eine solche, die eine Achsenbewegung der Maschine veranlasst (d. h. einen Dreh- oder Linear-Antrieb einer Maschinenachse).

Vorteilhaft ist der zweite Drehgeber (bestehend aus Maßband und Lesekopf) an einer Position angebracht, die möglichst alle relevanten rotatorischen Schwingformen messtechnisch erfassen kann, zumindest auch diejenigen, die vom ersten Drehgeber nicht erfasst werden können. Grund für eine nicht optimale Erfassung einer rotatorischen Schwingform kann hierbei sein, dass sich die Position des Drehgebers in einem Knotenpunkt einer Schwingform befindet. Entsprechende Positionen können z.B. über eine FEM Analyse ermittelt werden.

Die zweite Sensorik ist bevorzugt im Bereich einer Festlagerstelle der Spindel angeordnet.

An der Spindel kann mindestens ein weiterer Sensor zur Erfassung von translatorischen Beschleunigungen angeordnet sein, der mit der Messeinrichtung in Verbindung steht. In diesem Falle ist der Sensor zur Erfassung von translatorischen Beschleunigungen bevorzugt zur Erfassung der Beschleunigung in drei Achsrichtungen ausgebildet.

Die Messeinrichtung ist bevorzugt zur Auswertung der Frequenzen, der Amplituden und/oder der Phasenlagen der von der zweiten Sensorik, von der weiteren Sensorik und gegebenenfalls vom Sensor zur Erfassung von translatorischen Beschleunigungen empfangenen Signale ausgebildet.

Gemäß der vorgeschlagenen Lösung wird somit insbesondere in die Werkstückachse und bei Bedarf auch in die Werkzeugachse (sowie gegebenenfalls auch in weitere Achsen der Maschine) eine zusätzliche Sensorik integriert, welche es ermöglicht, dass eine genauere und dynamischere Messung der Dynamik der Maschine und insbesondere der Drehzahlen (als schwingungsrelevante Größe) durchgeführt werden kann.

Hierdurch stehen bisher nicht gegebene Möglichkeiten zur Verfügung, um den Bearbeitungsprozess hinsichtlich Schwingformen, Amplituden und auch damit verbundenen geräuschkritischen Ordnungen zu analysieren.

Auf Basis einer (automatisierten) Analyse lassen sich dann auch Maßnahmen (automatisiert, teilautomatisiert oder auch nur als Hinweis an einen Maschinenbediener) initiieren, um bei Bedarf den Bearbeitungsprozess zu optimieren bzw. zu korrigieren.

Da ein direkter Abgriff (als Signalweiche) des Drehgebers, der für die Regelung der Drehung der Spindel erforderlich ist, nicht zulässig ist, werden also nach dem vorliegenden Vorschlag bevorzugt ein oder mehrere zusätzliche Maßbänder und Leseköpfe vorgesehen, um das dynamische Verhalten der Spindel bei Rotation verbessert erfassen zu können. Diese zusätzliche Sensorik ist nicht in den Regelkreis eingebunden, mit dem die Drehung der Spindel geregelt wird; vielmehr werden die Signale an eine separate Messeinrichtung geleitet, wo sie ausgewertet werden.

Wie oben angegeben, soll die zweite Sensorik an einer zweiten axialen Position der Spindel angeordnet sein. Kommen in einem konkreten Anwendungsfall Reitstöcke (beispielsweise bei Werkstückachsen) oder Gegenlager (beispielsweise bei Werkzeugachsen) zum Einsatz, ist dies vorliegend so zu verstehen, dass der Reitstock bzw. das Gegenlager auch der Spindel zuzurechnen ist und somit die genannte zweite Sensorik (und gegebenenfalls auch noch eine dritte Sensorik) auch in diesen Bauteilen platziert werden kann. Dies gilt auch gegebenenfalls für translatorische Beschleunigungsaufnehmer. Hierdurch kann die entstehende Schwingungsform in einem konkreten Anwendungsfall eventuell noch besser und detaillierter bestimmt werden.

In der Zeichnung sind Ausführungsbeispiele der Erfindung dargestellt.
- Fig. 1: zeigt schematisch eine Werkstückspindel einer Verzahnungsschleifmaschine, welche mit einer erfindungsgemäßen Sensorik ausgestattet ist, und
- Fig.2: ein Ablaufdiagramm für eine automatische Optimierung der Schleifbearbeitung einer Verzahnung.

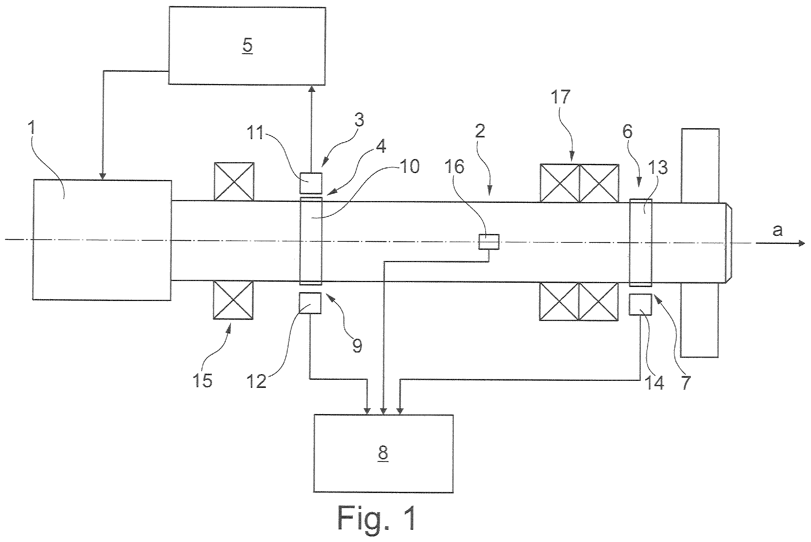

In Figur 1 ist eine Spindel 2 in Form einer Werkstückspindel einer Verzahnungsschleifmaschine skizziert, welche von einem Motor 1 angetrieben wird. Die Spindel 2 ist mittels eines Festlagers an einer Festlagerstelle 17 sowie mittels eines Loslagers an einer Loslagerstelle 15 gelagert und rotiert vom Motor 1 angetrieben um die Achse a. Die Rotation der Spindel 2 wird durch eine Regelvorrichtung 5 veranlasst, welche den Motor 1 so ansteuert, dass eine vorgegebene Drehung der Spindel 2 ausgeführt wird.

Zu diesem Zweck muss die Drehung der Spindel, insbesondere deren Drehwinkel, bekannt sein. Hierzu weist die Spindel 2 an einer ersten axialen Position 3 eine erste Sensorik 4 auf, die aus einem Maßband 10 und einem Lesekopf 11 besteht; der Lesekopf 11 liefert Daten an die Regelvorrichtung 5.

Insoweit entspricht der Aufbau dem Stand der Technik.

Wesentlich ist, dass an einer zweiten axialen Position 6 der Spindel 2, die von der ersten axialen Position 3 verschieden ist, eine zweite Sensorik 7 angeordnet ist, die zur Erfassung der Drehung der Spindel 2 an der zweiten axialen Position 6 ausgebildet ist. Die zweite Sensorik 6 steht dabei mit einer Messeinrichtung 8 in Verbindung. Darüber hinaus ist eine weitere Sensorik 9 an der ersten axialen Position 3 der Spindel 2 angeordnet, die zur Erfassung der Drehung der Spindel 2 an der ersten axialen Position 3 ausgebildet ist; auch diese steht mit der Messeinrichtung 8 in Verbindung.

Dabei ist ein weiterer Lesekopf 12 an der ersten axialen Position 3 vorgesehen, der gleichermaßen auf das Maßband 10 zugreift und von diesem Signale erfasst; diese werden dann vom weiteren Lesekopf 12 an die Messeinrichtung 8 weitergeleitet.

Die zweite Sensorik 7 an der zweiten axialen Position 6 besteht dabei gleichermaßen aus einem weiteren Maßband 13, der mit der Spindel verbunden ist und einem weiteren Lesekopf 14, der seine Signale an die Messeinrichtung 8 weitergibt.

Auf der Spindel 2 ist weiterhin ein Sensor 16 zur Erfassung von translatorischen Beschleunigungen angeordnet, der (gegebenenfalls über eine drahtlose Kommunikation) seine Signale gleichermaßen an die Messeinrichtung 8 weitergibt.

Eine bevorzugte Lösung beinhaltet somit einen zusätzlichen Lesekopf am Maßband; Lesekopf und Maßband bilden den Drehgeber, welcher für die Regelung verwendet wird. Zusätzlich wird ein weiteres Maßband an einer anderen Position (beispielsweise nahe des Festlagers der Spindel) eingebaut. Des Weiteren sind an den verschiedenen Lagerpunkten translatorische Beschleunigungsaufnehmer (im Idealfall triaxiale Sensoren, die also in drei Achsrichtungen Beschleunigungen aufnehmen können) verbaut.

Damit wird es möglich, mittels der Messeinrichtung 8 den Bearbeitungsprozess wesentlich genauer zu analysieren und hinsichtlich auftretender Schwingungen zu beurteilen. Dabei werden bevorzugt die Schwingformen einschließlich Frequenzen, Amplituden und Phasenlagen erfasst, so dass ausgehend hiervon bei Bedarf Abhilfemaßnahmen eingeleitet werden können, die einen stabileren Bearbeitungsprozess sicherstellen.

Der zusätzliche Einsatz weiterer Messtechnik insbesondere in Form rotatorischer Beschleunigungsaufnehmer kann gegebenenfalls genauere Ergebnisse liefern.

Dabei besteht auch die Möglichkeit, dass auf Basis eines entsprechenden Algorithmus besagte Maßnahmen direkt an der Maschine angezeigt oder auch direkt ausgeführt werden. Alternativ kann auch ein Hinweis an den Maschinenbediener ausgegeben werden.

Vorteilhaft ist in diesem Zusammenhang eine schnellere und detailliertere Fehleranalyse für auftretende und sonst nicht erkennbare Sonderfälle.

Mit der vorgeschlagenen Lösung können problemlos Torsion- und Biegeschwingung erfasst und unterschieden werden, was mit den vorbekannten Lösungen nicht der Fall ist.

Durch den Einsatz insbesondere des besagten zusätzlichen Lesekopfes oder eines zusätzlichen Maßbandes können neben den translatorischen Schwingungen über die Beschleunigungsaufnehmer auch rotatorische Schwingungen (d. h. Torsionsschwingungen) hochgenau und dynamisch aufgenommen werden. Mitunter sind in gattungsgemäßen Hartfeinbearbeitungsmaschinen bereits diverse Beschleunigungsaufnehmer verbaut, die zusätzlich zur Signalanalyse herangezogen werden können.

In der Messeinrichtung 8 werden die erfassten Messwerte ausgewertet. Die Messeinrichtung kann dabei Bestandteil eines Industrie-PCs sein, in dem die erfassten Messwerte zeitsynchron aufgezeichnet werden.

Die Analyse findet typischerweise mit Hilfe einer Frequenzanalyse statt. Dabei werden sowohl Frequenzen als auch Amplituden und Phasenlagen der Signale analysiert.

Eine weitere Information, die für die Analyse im Idealfall vorhanden ist, sind die Bearbeitungsparameter des Prozesses.

Die Analysen können dabei auf Basis einer Betriebsschwingformanalyse (in Zusammenhang mit einer FEM-Simulation oder einer experimentellen Modalanalyse) durchgeführt werden. Dabei wird erkannt, ob eine Schwingform für den Prozess charakteristisch (beispielsweise bedingt durch den Eingriff des Werkzeugs ins Werkstück) oder aber störend bzw. problematisch für den Prozess ist.

Basis für mögliche Maßnahmen, die gegebenenfalls durch das System autark und automatisiert eingeleitet werden, kann ein "Fehlerkatalog" sein, der auf Erfahrungswerten basiert. Mittels eines entsprechenden Algorithmus, der auch Wahrscheinlichkeitsbetrachtung mit einbeziehen kann, kann dann eine Abhilfemaßnahme automatisch, teilautomatisiert oder per Meldung an den Maschinenbediener durchgeführt bzw. vorgeschlagen werden.

Eine weitere Möglichkeit zur Analyse und zur Einleitung von Maßnahmen ist die Verwendung von Algorithmen aus dem Bereich der Künstlichen Intelligenz (KI) und des Machine Learning (ML). Sowohl beim klassischen als auch beim ML-Ansatz ist eine Rückkopplung über den Erfolg der Maßnahme durch die Analyse der nachfolgenden Bearbeitungsprozesse möglich, so dass eine eigenständige Optimierung der Maßnahmen erfolgen kann.

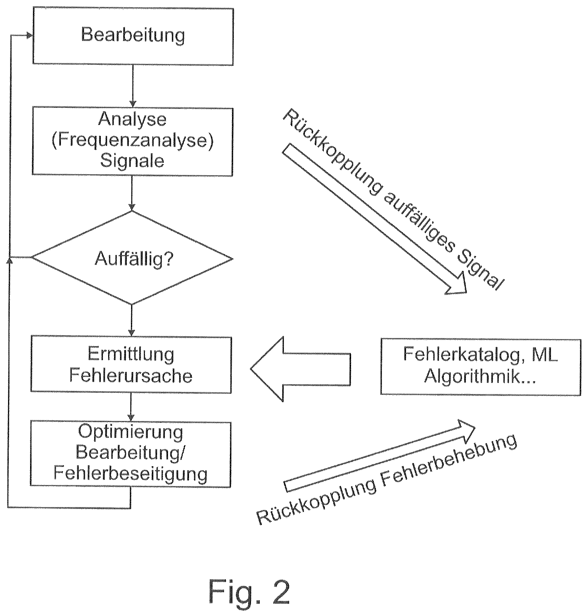

Zu der zuletzt erwähnten Vorgehensweise wird auf Figur 2 Bezug genommen. Hier ist ein Ablaufdiagramm wiedergegeben, welches das erläuterte Vorgehen beispielhaft illustriert.

Zunächst erfolgt die Bearbeitung eines Werkstücks und anschließend die Analyse der aufgenommenen Messwerte in der Messeinrichtung 8 (Frequenzanalyse der Signale). Im nachfolgenden Schritt wird geprüft, ob die erfassten Signale auffällig sind oder nicht. Hierzu können beispielsweise Messwerte bzw. daraus abgeleitete Größen (wie beispielsweise die Amplituden bestimmter Harmonischer der erfassten Schwingungen) mit vorgegebenen Werten verglichen werden.

Ist das Signal auffällig, kann ein Vergleich mit einem Fehlerkatalog erfolgen, so dass auf die Fehlerursache geschlossen werden kann. Insoweit besteht eine Rückkopplung eines auffälligen Signals mit Informationen, die sich aus dem Fehlerkatalog ergeben. Der Begriff Fehlerkatalog wird aus bekannten Fehlerbildern der Bearbeitung hergeleitet und den damit verbundenen aufgezeichneten Signalen. Im Idealfall sind zu jedem Fehlerbild Signalverläufe aus Schlecht- und Gutzustand vorhanden und entsprechende Abhilfemaßnahmen hinterlegt.

Im Anschluss daran können optimierte Parameter definiert werden, mit denen eine verbesserte Bearbeitung möglich ist bzw. mit denen der ermittelte Fehler beseitigt werden kann. Die daraus gewonnenen Erkenntnisse können dann in den Fehlerkatalog rückgekoppelt werden.

Die Erkenntnisse, die aus dem beschriebenen Messkonzept gewonnen werden, können in eine optimierte Auswertealgorithmik einfließen, insbesondere in den genannten Fehlerkatalog. Hierfür sind KI-Systeme, insbesondere das Machine Learning, ein effektives Instrument. Hierdurch kann auch eine automatisierte Fehlerbehebung installiert werden.

Insoweit ergibt sich ein Konzept, welches automatisch abgearbeitet werden kann und ständig das Bearbeitungsergebnis überwacht.

### Bezugszeichenliste:

- 1: Motor
- 2: Spindel
- 3: erste axiale Position
- 4: erste Sensorik
- 5: Regelvorrichtung
- 6: zweite axiale Position
- 7: zweite Sensorik
- 8: Messeinrichtung
- 9: weitere Sensorik
- 10, 11: Drehgeber
- 10: Maßband
- 11: Lesekopf
- 12: weiterer Lesekopf
- 13, 14: weiterer Drehgeber
- 13: weiteres Maßband
- 14: weiterer Lesekopf
- 15: Loslagerstelle
- 16: Sensor zur Erfassung von translatorischen Beschleunigungen
- 17: Festlagerstelle

- a: Achse

## Patentansprüche

1. Hartfeinbearbeitungsmaschine für die Bearbeitung von Werkstücken mit mindestens einer Verzahnung oder mit mindestens einem Profil, insbesondere Verzahnungsschleifmaschine, umfassend mindestens eine von einem Motor (1) rotatorisch angetriebene Spindel (2), wobei die Spindel (2) an einer ersten axialen Position (3) eine erste Sensorik (4) zur Erfassung der Drehung, insbesondere des Drehwinkels und/oder der Drehgeschwindigkeit und/oder der Drehbeschleunigung, der Spindel (2) an der ersten axialen Position (3) aufweist, wobei die erste Sensorik (4) mit einer Regelvorrichtung (5) zur Regelung der Drehung der Spindel (2) in Verbindung steht, wobei an einer zweiten axialen Position (6) der Spindel (2), die von der ersten axialen Position (3) verschieden ist, eine zweite Sensorik (7) angeordnet ist, die zur Erfassung der Drehung, insbesondere des Drehwinkels und/oder der Drehgeschwindigkeit und/oder der Drehbeschleunigung, der Spindel (2) an der zweiten axialen Position (6) ausgebildet ist, wobei die zweite Sensorik (7) mit einer Messeinrichtung (8) in Verbindung steht, wobei weiterhin eine weitere Sensorik (9) an der ersten axialen Position (3) der Spindel (2) angeordnet ist, die zur Erfassung der Drehung, insbesondere des Drehwinkels und/oder der Drehgeschwindigkeit und/oder der Drehbeschleunigung, der Spindel (2) an der ersten axialen Position (3) ausgebildet ist, die ebenfalls mit der Messeinrichtung (8) in Verbindung steht,
**dadurch gekennzeichnet,**
**dass** die erste Sensorik (4) an der ersten axialen Position (3) ein mit dem rotierenden Teil der Spindel (2) verbundenes Maßband (10) sowie einen mit dem nicht-drehenden Teil der Spindel (2) verbundenen Lesekopf (11) zum Lesen der Signale des Maßbandes (10) umfasst, wobei die weitere Sensorik (9) an der ersten axialen Position (3) der Spindel (2) einen weiteren Lesekopf (12) zum Lesen der Signale des Maßbandes (10) umfasst, wobei die zweite Sensorik (7) an der zweiten axialen Position (6) ein mit dem rotierenden Teil der Spindel (2) verbundenes weiteres Maßband (13) sowie einen mit dem nicht-drehenden Teil der Spindel (2) verbundenen weiteren Lesekopf (14) zum Lesen der Signale des weiteren Maßbandes (13) umfasst.

2. Hartfeinbearbeitungsmaschine nach Anspruch 1, **dadurch gekennzeichnet, dass** die Messeinrichtung (8) als von der Regelvorrichtung (5) getrennte Einheit ausgebildet ist.

3. Hartfeinbearbeitungsmaschine nach Anspruch 1 oder 2, **dadurch gekennzeichnet, dass** die Spindel (2) eine Werkstückspindel oder eine Werkzeugspindel ist.

4. Hartfeinbearbeitungsmaschine nach Anspruch 1 oder 2, **dadurch gekennzeichnet, dass** die Spindel (2) eine solche ist, die eine Achsenbewegung veranlasst.

5. Hartfeinbearbeitungsmaschine nach einem der Ansprüche 1 bis 4, **dadurch gekennzeichnet, dass** die zweite Sensorik (7) im Bereich einer Festlagerstelle (17) der Spindel (2) angeordnet ist.

6. Hartfeinbearbeitungsmaschine nach einem der Ansprüche 1 bis 5, **dadurch gekennzeichnet, dass** an der Spindel (2) mindestens ein weiterer Sensor (16) zur Erfassung von translatorischen Beschleunigungen angeordnet sind, der mit der Messeinrichtung (8) in Verbindung steht.

7. Hartfeinbearbeitungsmaschine nach Anspruch 6, **dadurch gekennzeichnet, dass** der Sensor (16) zur Erfassung von translatorischen Beschleunigungen zur Erfassung der Beschleunigung in drei Achsrichtungen ausgebildet ist.

8. Hartfeinbearbeitungsmaschine nach einem der Ansprüche 1 bis 7, **dadurch gekennzeichnet, dass** die Messeinrichtung (8) zur Auswertung der Frequenzen und/oder der Amplituden und/oder der Phasenlagen der von der zweiten Sensorik (7), von der weiteren Sensorik (9) und gegebenenfalls vom Sensor (16) zur Erfassung von translatorischen Beschleunigungen empfangenen Signale ausgebildet ist.
